# EUROPEAN PATENT APPLICATION

(11) **EP 4 541 972 A1**
(43) Date of publication of application: **23.04.2025**
(21) Application number: 24206953.2
(22) Date of filing: 16.10.2024
(51) Int. Cl.: E02F 9/26

(54) **CALIBRATION SYSTEM FOR SPATIAL RECOGNITION DEVICES FOR WORK MACHINE, AND WORK MACHINE**

(30) Priority: 19.10.2023 JP 2023180113
(71) Applicant: Sumitomo Heavy Industries, Ltd., Tokyo 141-6025 (JP)
(72) Inventor: MATSUOKA, Taira, Kanagawa 237-8555, (JP)
(74) Representative: Louis Pöhlau Lohrentz

(57) **Abstract**

A calibration system for spatial recognition devices for a work machine, includes a work machine, a plurality of spatial recognition devices provided in the work machine and configured to acquire a surrounding situation of the work machine, and a control device configured to calibrate the plurality of spatial recognition devices, based on an object located around the work machine. The control device is configured to teach each spatial recognition device of the plurality of spatial recognition devices whether or not the object is located at a calibratable position.

## Description

### BACKGROUND

### 1. Field of the Invention

The present invention relates to calibration systems for spatial recognition devices for work machines, and work machines.

### 2. Description of the Related Art

In recent years, there is a trend to provide a spatial recognition device, such as a LiDAR, an imaging device, or the like, in a work machine in order to monitor a surrounding of the work machine.

When the spatial recognition device is provided in the work machine, the spatial recognition device needs to be calibrated. A work machine proposed in International Publication Pamphlet No. WO 2023/063219 employs a technique to perform the calibration based on a shape of at least a part of the work machine included in a detection range.

Further, in a case where a plurality of spatial recognition devices are provided in the work machine, it is necessary to perform the calibration among the plurality of spatial recognition devices. The calibration among the plurality of spatial recognition devices is performed based on an object located in an overlapping range of the detection ranges of the plurality of spatial recognition devices. In such calibration among the plurality of spatial recognition devices, it is difficult to adjust the position of an object serving as a calibration target, and the calibration may require time to perform.

### SUMMARY

One aspect of the present invention teaches a position of an object for a calibration among a plurality of spatial recognition devices, thereby improving an efficiency of time required for the calibration.

A calibration system for spatial recognition devices for a work machine according to one aspect of the present invention includes a work machine; a plurality of spatial recognition devices provided in the work machine and configured to acquire a surrounding situation of the work machine; and a control device configured to calibrate the plurality of spatial recognition devices, based on an object located around the work machine, wherein the control device is configured to teach each spatial recognition device of the plurality of spatial recognition devices whether or not the object is located at a calibratable position.

The object and advantages of the embodiments will be realized and attained by means of the elements and combinations particularly pointed out in the claims.

It is to be understood that both the foregoing general description and the following detailed description are exemplary and explanatory and not restrictive of the invention, as claimed.

### BRIEF DESCRIPTION OF THE DRAWINGS

FIG. 1 is a side view illustrating a crawler crane according to one embodiment;
FIG. 2 is a block diagram schematically illustrating an example of a configuration of the crawler crane according to one embodiment;
FIG. 3 is a diagram illustrating a measuring range of a distance measuring device and an imaging range of an imaging device according to one embodiment;
FIG. 4 is a block diagram illustrating a configuration example of a calibration system for spatial recognition devices provided in the crawler crane according to one embodiment;
FIG. 5 is a schematic diagram illustrating an example of a determination by a position determination unit according to one embodiment;
FIG. 6 is a schematic diagram illustrating a calibration of the spatial recognition devices of the crawler crane according to one embodiment;
FIG. 7 is a diagram for explaining an example in which an worker is located at a calibratable position where the calibration can be performed among a plurality of distance measuring devices according to one embodiment;
FIG. 8 is a diagram illustrating a transition of a screen displayed on a portable communication terminal according to another embodiment;
FIG. 9 is a diagram illustrating an example of a screen displayed on a display device by a display controller according to a modification of another embodiment;
FIG. 10 is a diagram illustrating an example of the screen displayed on the display device by the display controller according to the modification of another embodiment;
FIG. 11 is a diagram illustrating a transition of the screen displayed on the portable communication terminal according to still another embodiment; and
FIG. 12 is a schematic diagram illustrating a method of generating a moving path by an output control unit according to a modification of still another embodiment.

### DETAILED DESCRIPTION

Hereinafter, embodiments and modifications of the present invention will be described with reference to the drawings. The embodiments and modifications described below are not intended to be restrictive of the invention but are merely examples, and some of the features or combinations thereof described in the embodiments and modifications may be omitted, as appropriate. In the drawings, the same or corresponding constituent elements are designated by the same or corresponding reference numerals, and a redundant description thereof may be omitted.

In the embodiments of the present invention described in the following, an example of using a crane illustrated below will be described as an example of the work machine, but the work machine is not limited to the crane illustrated below.

### (One Embodiment)

Hereinafter, the embodiments of the invention will be described with reference to the drawings.

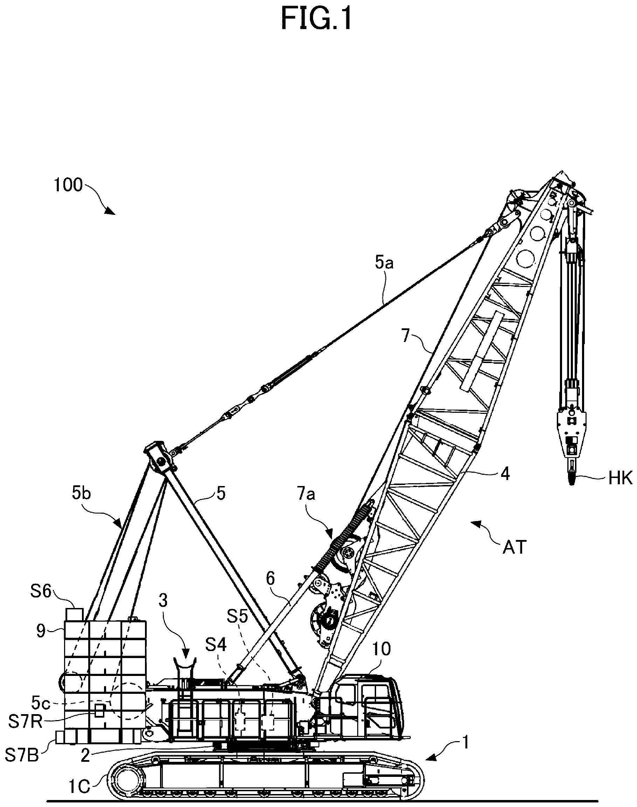

First, an overview of a crawler crane 100 as an example of a work machine will be described with reference to FIG. 1.

The crawler crane 100 includes an undercarriage 1, a slewing upper structure 3 provided on the undercarriage 1 via a slewing mechanism 2 so that the slewing upper structure 3 is free to swivel, an attachment AT, a mast 5, a backstop 6, a hook HK, a counterweight 9, and a cabin 10.

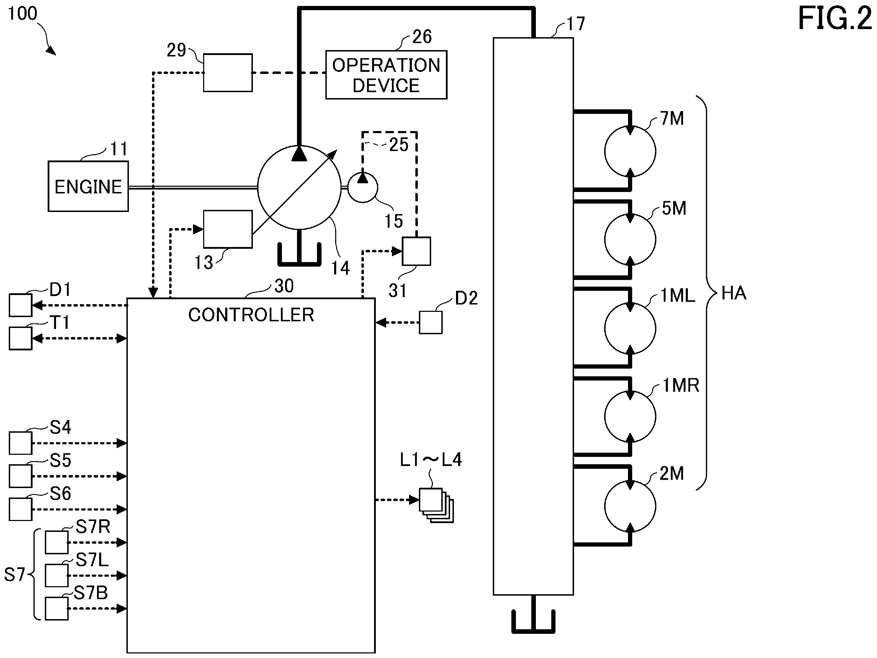

The undercarriage 1 includes a pair of left and right crawlers 1C, for example. The undercarriage 1 causes the crawler crane 100 to travel by hydraulically driving the left crawler 1C by a left hydraulic travel motor 1ML, and driving the right crawler 1C by a right hydraulic travel motor 1MR illustrated in FIG. 2.

The slewing upper structure 3 swivels with respect to the undercarriage 1 when the slewing mechanism 2 is hydraulically driven by a hydraulic swivel motor 2M illustrated in FIG. 2.

The attachment AT, which is an example of a work device, includes a boom 4 and a main hoisting rope 7.

The boom 4 is attached to a front center of the slewing upper structure 3, and can be raised and lowered. The main hoisting rope 7 is suspended from a tip end of the boom 4, and a hook HK is attached to a tip end of the main hoisting rope 7. That is, the hook HK is attached to the tip of the boom 4 via the main hoisting rope 7.

A base end of the main hoisting rope 7 is attached to a main hoisting winch 7a that is provided on a rear surface portion between the base end and the tip end of the boom 4, and the tip end of the main hoisting rope 7 is attached to the hook HK. The main hoisting rope 7 can move the hook HK up and down by being wound and unwound by the main hoisting winch 7a that is hydraulically driven by a main hoisting hydraulic motor 7M illustrated in FIG. 2.

The mast 5 is attached to the slewing upper structure 3 at a position slightly rearward of the base end of the boom 4, so as to be rotatable around a rotation axis parallel to a rotation axis of the boom 4. A tip end of the mast 5 is connected to the tip end of the boom 4 via a pendant rope 5a, and the boom 4 is raised and lowered via the mast 5 by the winding and unwinding of a boom raising and lowering rope 5b by a boom raising and lowering winch 5c that are hydraulically driven by a raising and lowering hydraulic motor 5M illustrated in FIG. 2.

A base end of the backstop 6 is attached at to a portion of the slewing upper structure 3 rearward of the base end of the boom 4, so as to be rotatable around a rotation axis parallel to the rotation axis of the boom 4. A tip end of the backstop 6 is attached to a rear surface portion between the base end and the tip end of the boom 4, so as to be rotatable around a rotation axis parallel to the rotation axis of the boom 4. The backstop 6 expands and contracts according to raising and lowering operations of the boom 4, and has a function of supporting the boom 4 from the rear when the boom 4 is in a substantially upright state, for example.

The hook HK is attached to the tip end of the main hoisting rope 7, and is used to suspend a suspended load.

The counterweight 9 is provided at a rear end of the slewing upper structure 3, and has a function of balancing weights of the boom 4 and the suspended load.

The cabin 10 is provided at a front right end portion of the slewing upper structure 3, for example. An operation device 26 illustrated in FIG. 2, configured to operate an worker's seat and various actuators, is provided inside the cabin 10.

In the present embodiment, an example will be described where an imaging device S6 and distance measuring devices (or ranging devices) S7 are provided as a plurality of spatial recognition devices capable of acquiring a surrounding situation (or a surrounding state) of the crawler crane 100.

The imaging device S6 is attached to an upper portion of a rear end of the counterweight 9, for example, and captures an image on the rear of the crawler crane 100. The imaging device S6 is a monocular wide-angle camera having a very wide field of view, for example. In addition, the imaging device S6 may be a stereo camera, a range image camera, or the like. A controller 30 receives the image captured by the imaging device S6.

The imaging device S6 according to the present embodiment may be provided at any position where the imaging device S6 can monitor the surrounding of the crawler crane 100, and the position of the imaging device S6 is not limited to the upper portion of the rear end of the counterweight 9. For example, the imaging device S6 may be provided on a left upper portion, a right upper portion, a front upper portion, or the like of the counterweight 9.

The distance measuring devices S7 may be any device that is provided around the counterweight 9 and is capable of detecting a distance to an object located around the crawler crane 100. The distance measuring devices S7 are light detection and ranging (LiDAR) devices, for example.

The distance measuring devices S7 emit infrared rays in a certain direction and receive reflected light from the object in the certain direction, for example, so as to acquire information related to the object around the crawler crane 100, specifically, information related to the received reflected light (hereinafter, also referred to as "received light information"). The distance measuring devices S7 are scanning LiDARs, for example, and are three-dimensional laser scanners capable of scanning by controlling an irradiating direction of an infrared laser in an up-down direction (or a vertical direction) and a left-right direction (or a horizontal direction). The distance measuring devices S7 may be so-called flash LiDARs that emit infrared rays from a light emitting module to a three-dimensional wide range, and capture an image of reflection light (infrared rays) by a three-dimensional range image device.

The distance measuring devices S7 (a distance measuring device S7B, a distance measuring device S7R, and a distance measuring device S7L) are attached to a lower portion of the rear end, a rear portion of a left surface, and a rear portion of a right surface of the counterweight 9, respectively, and perform the detection at the rear, the right side, and the left side of the crawler crane 100, respectively.

Further, the distance measuring devices S7 may be provided on the upper surface of the counterweight 9 or near a front side of the slewing upper structure 3 of the crawler crane 100, in order to detect an object located in front of the crawler crane 100.

The distance measuring device S7B detects a measuring range on a rear of the counterweight 9, such as a measuring range from the rear left to the rear right in the horizontal direction (that is, in a circumferential direction viewed from the crawler crane 100), for example. In addition, the distance measuring device S7L detects a measuring range on the left side of the counterweight 9, such as a measuring range from the front left to the rear left of the counterweight 9 in the horizontal direction (that is, in the circumferential direction viewed from the crawler crane 100), for example. Moreover, the distance measuring device S7R detects a measuring range on the right side of the counterweight 9, such as a measuring range from the front right to the rear right of the counterweight 9 in the horizontal direction (that is, in the circumferential direction viewed from the crawler crane 100), for example.

Each of the distance measuring devices S7 of the crawler crane 100 is attached to the counterweight 9 or the upper portion of the slewing upper structure 3, such that an optical axis thereof is directed obliquely downward, to capture the image in the measuring range in the up-down direction from the ground near the crawler crane 100 to a position far from the crawler crane 100. Accordingly, the distance measuring devices S7B, S7L, and S7R are configured to be capable of irradiating the infrared rays with respect to the measuring ranges described above.

The measuring ranges of the distance measuring devices S7B, S7L, and S7R partially overlap each other, so that a blind spot will not occur. For this reason, the distance measuring devices S7B, S7L, and S7R need to be calibrated, so that an erroneous detection of the object can be avoided in the overlapping measuring ranges of the distance measuring devices S7B, S7L, and S7R (for example, so that the same object will not be detected as different objects).

Similarly, an imaging range of the imaging device S6 and the measuring ranges of the distance measuring devices S7 overlap. For this reason, the imaging device S6 and the distance measuring devices S7 need to be calibrated.

In particular, the crawler crane 100 is assembled at a site according to the site. The crawler crane 100 has a different number of weights stacked on the counterweight 9 or the like for each site. For this reason, the crawler crane 100 needs to calibrate spatial recognition devices (the imaging device S6 and the distance measuring devices S7) every time the crawler crane 100 is assembled at the site. Hence, there are demands for a method that enables a worker to easily perform the calibration at the site.

A method for enabling the crawler crane 100 to easily perform the calibration of a plurality of spatial recognition devices (including the imaging device S6 and the distance measuring devices S7) will be described in the present embodiment.

An example in which the imaging device S6 and the distance measuring devices S7 are provided as the spatial recognition devices will be described in the present embodiment, but the present embodiment is not limited to the example in which the imaging device S6 and the distance measuring devices S7 are provided, and a plurality of imaging devices S6 or a plurality of distance measuring devices S7 may be provided. The spatial recognition device may be a device other than the imaging device S6 and the distance measuring device S7, as long as the device can acquire the surrounding situation of the crawler crane 100.

For example, the spatial recognition device may be configured by other object detection devices, such as an ultrasonic sensor, a millimeter-wave radar, a LIDAR, an infrared sensor, or the like. In a case where the millimeter-wave radar, the ultrasonic sensor, a laser radar, or the like is utilized as the spatial recognition device, a large number of signals (laser light or the like) may be emitted with respect to the object, and reflected signals from the object may be received to detect the distance and direction of the object from the received reflected signals.

### <<Hydraulic Drive System>>

As illustrated in FIG. 2, a hydraulic drive system of the crawler crane 100 according to the present embodiment includes hydraulic actuators HA configured to hydraulically drive driven elements, such as the undercarriage 1 (the left and right crawlers 1C), the slewing upper structure 3, and the attachment AT, as described above. The hydraulic drive system of the crawler crane 100 according to the present embodiment also includes an engine 11, a regulator 13, a main pump 14, and a control valve unit 17.

The hydraulic actuators HA included in the hydraulic drive system of the crawler crane 100 include the hydraulic travel motors 1MR and 1ML, the hydraulic swivel motor 2M, the raising and lowering hydraulic motor 5M, the main hoisting hydraulic motor 7M, or the like.

The engine 11 is a motor, and functions as a main power source in the hydraulic drive system. The engine 11 is a diesel engine using diesel as fuel, for example. The engine 11 is attached to the rear portion of the slewing upper structure 3, for example. The engine 11 rotates at a constant target rotation speed that is set in advance, under a direct or indirect control of the controller 30 which will be described later, and drives the main pump 14 and a pilot pump 15.

The regulator 13 controls (or adjusts) a discharge amount of the main pump 14, under a control of the controller 30. For example, the regulator 13 adjusts an angle of a swash plate of the main pump 14 (hereinafter, also referred to as a "tilt angle") in response to a control command from the controller 30.

The main pump 14 supplies a hydraulic fluid to the control valve unit 17 via a high-pressure hydraulic line. The main pump 14 is attached to the rear portion of the slewing upper structure 3, for example, similar to the engine 11. The main pump 14 is driven by the engine 11 as described above. The main pump 14 is a variable displacement hydraulic pump, for example, and a stroke length of a piston is adjusted by adjusting the tilt angle of the swash plate by the regulator 13 under the control of the controller 30 as described above, so as to control a discharge flow rate (discharge pressure).

The control valve unit 17 is a hydraulic control device configured to control the hydraulic actuators HA according to a content of an operation or a remote operation performed by the worker with respect to the operation device 26, or according to an operation command related to the automatic driving function output from the controller 30. The control valve unit 17 is attached to a central portion of the slewing upper structure 3, for example. As described above, the control valve unit 17 is connected to the main pump 14 via the high-pressure hydraulic line, and selectively supplies the hydraulic fluid supplied from the main pump 14 to each of the hydraulic actuators HA in response to the worker's operation, or in response to an operation command output from the controller 30. Specifically, the control valve unit 17 includes a plurality of control valves (hereinafter also referred to as "direction switching valves") configured to control the flow rate and the flow direction of the hydraulic fluid supplied from the main pump 14 to each of the hydraulic actuators HA.

### <<Operational System>>

An operational system of the crawler crane 100 according to the present embodiment includes the pilot pump 15, the operation device 26, and a proportional valve 31.

The pilot pump 15 supplies a pilot pressure to various hydraulic devices via a pilot line 25. The pilot pump 15 is attached to the rear portion of the slewing upper structure 3, for example, similar to the engine 11. The pilot pump 15 is a fixed displacement hydraulic pump, for example, and is driven by the engine 11 as described above.

The pilot pump 15 may be omitted. In this case, the hydraulic fluid having a relatively low pressure, obtained by reducing the pressure of the hydraulic fluid having a relatively high pressure discharged from the main pump 14 using a predetermined pressure reducing valve, is supplied to the various hydraulic devices as the pilot pressure.

The operation device 26 is provided near the worker's seat of the cabin 10, and is used by the worker to operate various driven elements. In other words, the operation device 26 is used by the worker to operate the hydraulic actuators HA that drive the various driven elements. The operation device 26 includes a pedal device, a lever device, or the like for operating the driven elements (hydraulic actuators HA).

For example, the operation device 26 is an electric device. Specifically, the operation device 26 outputs an electric signal (hereinafter also referred to as an "operation signal") according to the operation content, and the controller 30 receives the operation signal. The controller 30 outputs a control command according to the content of the operation signal, that is, a control signal according to the operation content with respect to the operation device 26, to the proportional valve 31. Thus, the pilot pressure according to the operation content of the operation device 26 is input from the proportional valve 31 to the control valve unit 17, and the control valve unit 17 can drive the hydraulic actuators HA according to the operation content of the operation device 26.

Further, the control valves (direction switching valves) that are provided in the control valve unit 17 to drive the hydraulic actuators HA, respectively, may be electromagnetic control valves (or solenoid-operated control valves). In this case, the operation signal output from the operation device 26 may be input directly to the control valve unit 17, that is, to the electromagnetic control valves.

The proportional valve 31 is provided with respect to each driven element (each hydraulic actuator HA) to be operated by the operation device 26. The proportional valve 31 is disposed in a conduit that connects the pilot pump 15 and a pilot port of the control valve in the control valve unit 17, and is configured so that a flow path area of the conduit is variable. In the present embodiment, the proportional valve 31 operates in response to the control command output from the controller 30. For this reason, the controller 30 can supply the hydraulic fluid discharged from the pilot pump 15 to the pilot port of the control valve in the control valve unit 17 via the proportional valve 31, regardless of an operator's operation performed on the operation device 26.

### <<User Interface System>>

A user interface system of the crawler crane 100 according to the present embodiment includes the operation device 26, an output device D1, and an input device D2.

The output device D1 outputs various kinds of information with respect to the user (or worker) of the crawler crane 100 inside the cabin 10 of the crawler crane 100.

For example, the output device D1 is provided at a position that is easily visible from the worker seated inside the cabin 10, and includes an interior illumination device, a display device, or the like which can output various kinds of information in a manner visually recognizable by the worker. The illumination device is a warning lamp or the like, for example. The display device is a liquid crystal display, an organic electroluminescence (EL) display, or the like, for example.

In addition, the output device D1 includes a sound output device which can output various kinds of information in a manner auditorily recognizable by the worker. The sound output device includes a buzzer, a speaker, or the like, for example.

Moreover, the output device D1 includes a device which can output various kinds of information in a manner tactilely recognizable (or recognizable by touch) by the worker, such as vibration of the worker's seat or the like, for example.

The input device D2 is provided at a position in a range close to the worker seated inside the cabin 10, and receives various inputs from the worker. The controller 30 receives signals corresponding to the received inputs.

For example, the input device D2 is an operation input device configured to receive an operation input. The operation input device may include a touchscreen panel implemented in the display device, a touchpad provided around the display device, a button switch, a lever, a toggle, a knob switch provided in the operation device 26 (lever device), or the like.

In addition, the input device D2 may be a speech (or voice) input device configured to receive a voice input of the worker. The voice input device includes a microphone, for example.

Moreover, the input device D2 may be a gesture input device (or a gesture recognition device) configured to receive a gesture input of the worker, for example. The gesture input device includes an imaging device (an indoor camera) provided inside the cabin 10, for example.

### <<Communication System>>

A communication system of the crawler crane 100 according to the present embodiment includes a communication device T1 communicable with an external device.

The communication device T1 is connected to a communication line (or network) NW, and communicates with a device provided separately from the crawler crane 100. The device provided separately from the crawler crane 100 may include device located outside the crawler crane 100, and a portable terminal device carried into the cabin 10 by the user of the crawler crane 100. The communication device T1 may include a mobile communication module conforming to a standard such as the 4th generation (4G) or the 5th generation (5G), for example. In addition, the communication device T1 may include a satellite communication module, for example. Moreover, the communication device T1 may include a Wi-Fi (registered trademark) communication module, a Bluetooth (registered trademark) communication module, or the like, for example.

### <<Control System>>

A control system of the crawler crane 100 according to the present embodiment includes the controller 30. The control system of the crawler crane 100 according to the present embodiment includes an operation sensor 29 configured to detect the operation content of the operation device 26. Further, the control system of the crawler crane 100 includes light sources L1 through L4 that are used when performing the calibration. For example, the light sources L1 through L4 are provided at positions corresponding to the spatial recognition devices, respectively. The light sources L1 through L4 are turned on or flash (or blink) in a predetermined color to indicate situations related to the spatial recognition devices under the control of the controller 30.

The controller 30 performs various kinds of control related to the crawler crane 100. The functions of the controller 30 may be implemented by arbitrary hardware, or a combination of arbitrary hardware and software, or the like. For example, the controller 30 may mainly be configured by a computer (not illustrated) including a central processing unit (CPU), a memory device such as a random access memory (RAM), a non-volatile auxiliary storage device such as a read only memory (ROM), and various input-output interface devices, or the like. The controller 30 may perform various functions by loading a program installed in the auxiliary storage device into the memory device and executing the program on the CPU, for example. The program which, when executed by the computer, performs a process achieving the various functions of the controller 30, may be stored in a suitable non-volatile computer-readable storage medium.

The controller 30 performs the control related to the operations of the hydraulic actuators HA (driven elements) of the crawler crane 100, with the proportional valve 31 as a control target, for example.

Specifically, the controller 30 may perform the control related to the operations of the hydraulic actuators HA (driven elements) of the crawler crane 100 based on the operation of the operation device 26, with the proportional valve 31 as the control target.

### <<Overlapping Range of Spatial Recognition Devices>>

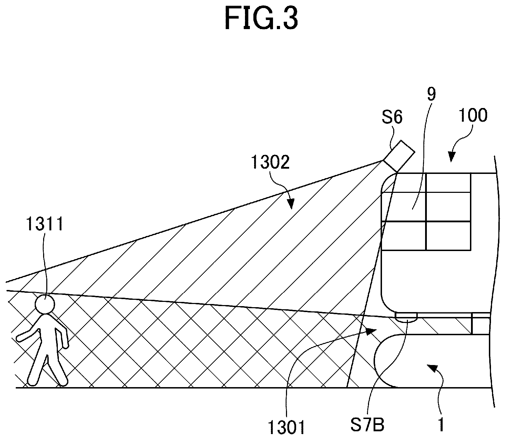

FIG. 3 is a diagram illustrating a measuring range of the distance measuring device S7B and the imaging range of the imaging device S6 according to the present embodiment. In the example illustrated in FIG. 3, the distance measuring device S7B can detect an object included in a measuring range 1301. On the other hand, the imaging device S6 can detect an object included in an imaging range 1302.

Further, the controller 30 performs the calibration between the distance measuring device S7B and the imaging device S6, based on the object located around the crawler crane 100.

The calibration according to the present embodiment refers to determining a positional relationship of the measuring ranges and the imaging ranges of the plurality of spatial recognition devices. More particularly, the calibration refers to determining the positional relationship of two or more measuring ranges, determining the positional relationship of two or more imaging ranges, determining the positional relationship of one or more measuring ranges and one or more imaging ranges, and determining the positional relationship of an arbitrary combination of measuring ranges and imaging ranges. In a case where the calibration is performed and the same object is detected by each of the plurality of spatial recognition devices, it is possible to prevent an erroneous detection in which the object is detected twice.

The present embodiment will be described by referring to an example in which a person (or worker) is used as a calibration target. Conventionally, a marker marked with an "x" or the like may often be used as the calibration target. However, in the case where the crawler crane 100 is assembled at a work site, it is necessary to bring the calibration target to the work site. However, the need to bring the calibration target to the work site each time the work is performed at the work site increases a load on the worker. Hence, in the example described in the present embodiment, a person is used as the calibration target. That is, because the worker will be present at the work site, it is not necessary to bring the marker or the like by using the worker as the calibration target, and thus, it is possible to improve a work efficiency. However, although the present embodiment describes an example in which a person (or worker) is used as the calibration target, a marker or the like that is conventionally used may also be used in the present embodiment as the calibration target.

As illustrated in FIG. 3, in the case where the distance measuring device S7B and the imaging device S6 are calibrated, a person 1311 may not be located inside the measuring range 1301 of the distance measuring device S7B and the imaging range 1302 of the imaging device S6. In this case, when the controller 30 calibrates the distance measuring device S7B and the imaging device S6, there is a possibility of generating a problem, such as a failure in the calibration, a failure in a calibration calculation in that the calibration calculation does not converge, or the like. In such a case, the controller 30 needs to perform calibration again after the person 1311 moves, and thus, there is a possibility of deteriorating a productivity.

Hence, the controller 30 according to the present embodiment is configured to teach whether or not the person 1311 is located at a calibratable position where a calibration can be performed, for each of the distance measuring devices S7 and the imaging device S6, when performing the calibration using one of the distance measuring devices S7 and the imaging device S6.

### <Block Configuration of Each Device for Performing Calibration>

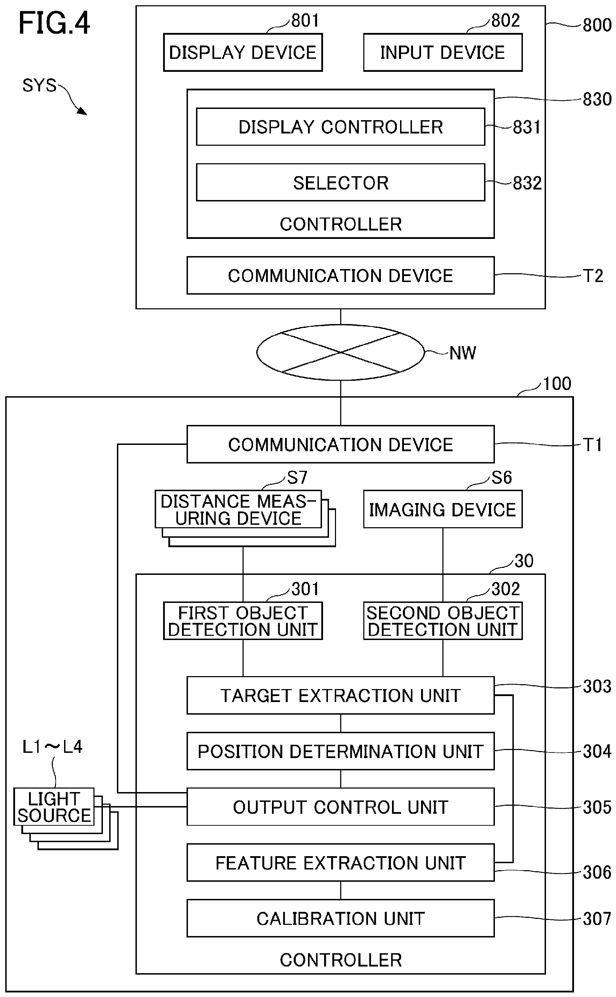

FIG. 4 is a block diagram illustrating a configuration example of a calibration system SYS of the spatial recognition device provided in the crawler crane 100 according to one embodiment. In the example illustrated in FIG. 4, the calibration system SYS of the spatial recognition device includes the crawler crane 100 and a portable communication terminal 800. As illustrated in FIG. 4, the crawler crane 100 and the portable communication terminal 800 are connected via the communication line (or network) NW.

The portable communication terminal 800 may be a communication terminal carried by a person (hereinafter, also referred to as the "worker") who is the calibration target. The controller 30 of the crawler crane 100 teaches the person, via the portable communication terminal 800, whether or not the person is located at the calibratable position. The present embodiment is not limited to the example in which the person serving as the calibration target carries the portable communication terminal 800, and the person may not carry the portable communication terminal 800. In this case, the controller 30 teaches the worker whether or not the worker is located at the calibratable position, using the light sources L1 through L4.

The portable communication terminal 800 includes a display device 801, an input device 802, a communication device T2, and a controller 830.

The display device 801 is a liquid crystal panel provided in the portable communication terminal 800, for example, and displays various information images under a control of the controller 830.

The input device 802 is an interface for the worker to input information, and is a touchscreen panel provided on the display device 801, for example.

The communication device T2 is connected to the communication line NW, and communicates with the crawler crane 100 or the like. The communication device T2 may include a mobile communication module conforming to the standard such as the 4th generation (4G) or the 5th generation (5G), for example. The communication device T2 may include a satellite communication module, for example. The communication device T2 may include a Wi-Fi (registered trademark) communication module, a Bluetooth (registered trademark) communication module, or the like, for example.

The controller 830 includes a central processing unit (CPU, not illustrated), for example, and performs various kinds of control by executing a program stored in a storage medium (not illustrated). The controller 830 according to the present embodiment includes a display controller 831 and a selector 832.

The display controller 831 performs a control for displaying various kinds of information on the display device 801. For example, the display controller 831 displays a list of the spatial recognition devices (for example, the plurality of distance measuring devices S7 and the imaging device S6) provided in the crawler crane 100 in a selectable manner.

The selector 832 is configured to select a plurality of spatial recognition devices to be calibrated. For example, the selector 832 may receive, from the worker via the input device 802, the selection of the plurality of spatial recognition devices from the list of spatial recognition devices (for example, the plurality of distance measuring devices S7 and the imaging devices S6) displayed on the display device 801. In addition, the selector 832 may automatically select the plurality of spatial recognition devices. Further, the selector 832 transmits information indicating the selected plurality of spatial recognition devices to the crawler crane 100 via the communication device T2.

The present embodiment describes an example in which the selector 832 is provided in the portable communication terminal 800. However, the present embodiment is not limited to the configuration in which the selector 832 is provided in the portable communication terminal 800, and the selector 130 may be provided in the controller 30 of the crawler crane 100.

The crawler crane 100 includes the light sources L1 through L4, the communication device T1, the plurality of distance measuring devices S7, the imaging device S6, and the controller 30. The light sources L1 through L4, the communication device T1, the plurality of distance measuring devices S7, and the imaging device S6 are as described above, and thus, a description thereof will be omitted.

The controller 30 includes a central processing unit (CPU, not illustrated), for example, and performs various kinds of control by executing a program stored in a storage medium (not illustrated). The controller 30 according to the present embodiment includes a first object detection unit 301, a second object detection unit 302, a target extraction unit 303, a position determination unit 304, an output control unit 305, a feature extraction unit 306, and a calibration unit 307.

The first object detection unit 301 is configured to detect an object located in the measuring ranges of the plurality of distance measuring devices S7, based on distance measurement results of the plurality of distance measuring devices S7. A method of detecting the object based on the distance measurement results is not particularly limited, and may be any known method or arbitrary method. For example, the first object detection unit 301 may generate a range image (in which the color differs depending on the distance) based on range information indicated by point cloud data which is a distance measurement result, and detect the object from the visualized range image.

The second object detection unit 302 is configured to detect the object located in the imaging range of the imaging device S6, based on the image information captured by the imaging device S6. A method of detecting the object based on image information is not particularly limited, and may be any known method or arbitrary method. For example, the second object detection unit 302 may identify a shape of the object using contour extraction, and the object may be detected based on the identified shape of the object.

The target extraction unit 303 extracts a region in which the worker serving as the calibration target is located, among the measuring ranges, from the object detected by the first object detection unit 301.

In addition, the target extraction unit 303 extracts a region in which the worker serving as the calibration target is located in the imaging range, from the object detected by the second object detection unit 302.

The position determination unit 304 determines whether or not the calibration target is located at a calibratable position, based on the region extracted by the target extraction unit 303 for each of the spatial recognition devices that perform the calibration.

When the position determination unit 304 according to the present embodiment receives information indicating the calibration target from the portable communication terminal 800, the position determination unit 304 selects the plurality of spatial recognition devices to be calibrated based on the received information. Further, the position determination unit 304 determines whether or not the calibration target is located at the calibratable position, for each of the selected plurality of spatial recognition devices. In the present embodiment, the spatial recognition devices to be calibrated are determined according to a selection of the worker who carries the portable communication terminal 800. Accordingly, because the spatial recognition devices can be calibrated in an order according to the selection (or request) of the worker, it is possible to prevent dissatisfaction or the like from arising in the worker.

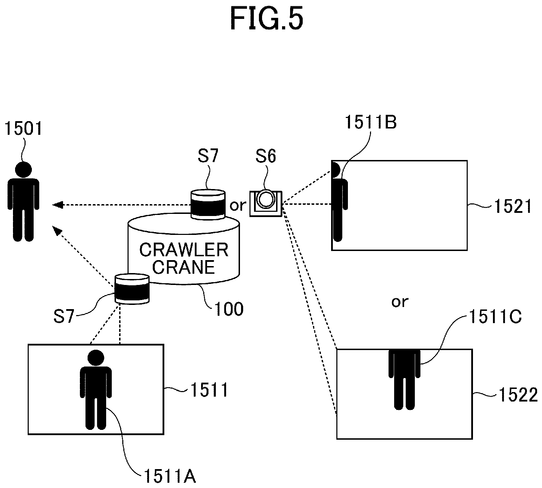

FIG. 5 is a schematic diagram illustrating an example of a determination by the position determination unit 304 according to the present embodiment. In the example illustrated in FIG. 5, the calibration is performed between a first distance measuring device S7 and a second distance measuring device S7 or the imaging device S6.

In the example illustrated in FIG. 5, the calibration is performed using each of body parts of a person 1501. For this reason, an entirety of the person 1501 needs to be included in the measuring range or the imaging range.

An image 1511 illustrated in FIG. 5 indicates a range image generated based on a measurement result of the first distance measuring device S7. An entirety of a person 1501A is captured in the image 1511. Accordingly, the position determination unit 304 determines that the person 1501 is located at a calibratable position, based on the measurement result of the first distance measuring device S7.

An image 1521 illustrated in FIG. 5 indicates a range image generated based on a measurement result of the second distance measuring device S7 or image information captured by the imaging device S6. A left portion of a person 1501B is cut off in the image 1521. Accordingly, the position determination unit 304 determines that the person 1501 is not located at a calibratable position, based on the measurement result of the second distance measuring device S7 or an imaging result of the imaging device S6.

An image 1522 illustrated in FIG. 5 indicates a range image generated based on the measurement result of the second distance measuring device S7 or the image information captured by the imaging device S6. An upper portion of a person 1501C is cut off in the image 1522. Accordingly, the position determination unit 304 determines that the person 1501 is not located at a calibratable position, based on the measurement result of the second distance measuring device S7 or the imaging result of the imaging device S6.

The output control unit 305 outputs a determination result of the position determination unit 304 for each of the plurality of spatial recognition devices. In the present embodiment, the determination result of the position determination unit 304 is represented by a color, as an example. In the case where the position determination unit 304 determines that the person 1501 is located at a calibratable position for a predetermined spatial recognition device (the distance measuring device S7 or the imaging device S6), the output control unit 305 outputs the color blue for the predetermined spatial recognition device, for example. In a case where the position determination unit 304 determines that the person 1501 is not located at a calibratable position for the predetermined spatial recognition device, the output control unit 305 outputs the color red for the predetermined spatial recognition device, for example.

For example, the output control unit 305 causes the light sources L1 through L4 provided at the positions corresponding to the plurality of spatial recognition devices to emit light in a color (an example of a mode) corresponding to whether or not the person 1501 is located at a calibratable position determined by the position determination unit 304.

In another example, the output control unit 305 transmits screen information to the portable communication terminal 800 via the communication device T1. In the screen information, the color corresponding to the determination result of the position determination unit 304 is displayed for each spatial recognition device selected by the selector 832. As described above, the output control unit 305 according to the present embodiment teaches the portable communication terminal 800, via the communication device T1, whether or not the person 1501 is located at a calibratable position.

The output control unit 305 according to the present embodiment outputs the determination result of the position determination unit 304 to the light sources L1 through L4 and the portable communication terminal 800, so that it is possible to recognize whether or not the person 1501 serving as the calibration target is located at a calibratable position. Hence, in a case where the person 1501 is not located at the calibratable position, this person 1501 can move to a calibratable position. Accordingly, it is possible to prevent a calibration failure of the controller 30, shorten a time required to complete the calibration, and improve the work efficiency.

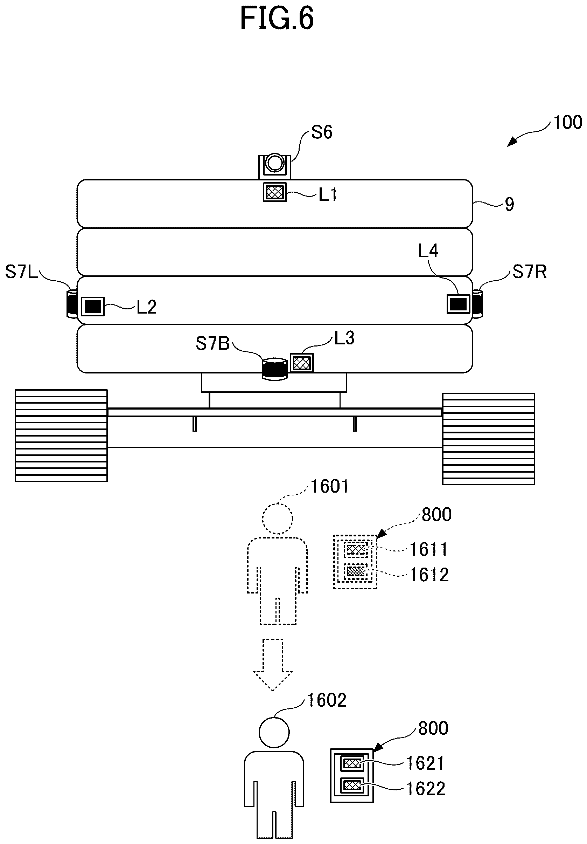

FIG. 6 is a schematic diagram illustrating the calibration of the spatial recognition devices of the crawler crane 100 according to the present embodiment. As illustrated in FIG. 6, the crawler crane 100 is provided with the imaging device S6 and the distance measuring devices S7B, S7R, and S7L. Further, the light source L1 corresponding to the imaging device S6, the light source L2 corresponding to the distance measuring device S7L, the light source L3 corresponding to the distance measuring device S7B, and the light source L4 corresponding to the distance measuring device S7R are provided on the rear surface of the counterweight 9 of the crawler crane 100.

In this example, it is assumed that the worker selects the imaging device S6 and the distance measuring device S7B as the devices to be calibrated, using the portable communication terminal 800. Accordingly, the controller 30 performs a process for calibrating the imaging device S6 and the distance measuring device S7B.

The worker is not located at a calibratable position where the calibration can be performed for the distance measuring device S7L and the distance measuring device S7R. For this reason, the output control unit 305 causes the light source L2 corresponding to the distance measuring devices S7L, the light source L3 corresponding to the distance measuring device S7B, and the light source L4 corresponding to the distance measuring devices S7R to emit red light.

At a point in time when the worker selects the imaging device S6 and the distance measuring device S7B as the devices to be calibrated, using the portable communication terminal 800, the output control unit 305 causes the light source L1 corresponding to the imaging device S6 and the light source L3 corresponding to the distance measuring device S7B to start flashing.

In a case where the worker is located at a position 1601, the output control unit 305 causes the light source L1 corresponding to the imaging device S6 to flash in blue, and causes the light source L3 corresponding to the distance measuring device S7B to flash in red. Further, the output control unit 305 transmits the screen information to the portable communication terminal 800 via the communication device T1. In the screen information, a region 1611 corresponding to the imaging device S6 flashes in blue, and a region 1612 corresponding to the distance measuring device S7B flashes in red. Thus, the worker can recognize that the distance measuring device S7B cannot be calibrated at the current position.

For this reason, the worker moves from the position 1601 to a position 1602.

In a case where the worker is located at the position 1602, the output control unit 305 causes the light source L1 corresponding to the imaging device S6 to flash in blue, and causes the light source L3 corresponding to the distance measuring device S7B to flash in blue. Further, the output control unit 305 transmits the screen information to the portable communication terminal 800 via the communication device T1. In the screen information, a region 1621 corresponding to the imaging device S6 flashes in blue, and a region 1622 corresponding to the distance measuring device S7B flashes in blue. Accordingly, the worker can recognize that the calibration can be performed between the imaging device S6 and the distance measuring device S7B at the current position. Hence, the calibration by the controller 30 is started.

After the calibration by the controller 30 is completed, the output control unit 305 turns on the light sources L1 and L3 in blue. Further, in the screen information transmitted from the output control unit 305, the region 1621 and the region 1622 are displayed in blue. Accordingly, the worker can recognize that the calibration between the imaging device S6 and the distance measuring device S7B is completed.

In the example illustrated in FIG. 6, the worker moves to the calibratable position in order to perform calibration between the distance measuring device S7B and the imaging device S6. However, the present embodiment is not limited to the example in which calibration is performed between the distance measuring device S7B and the imaging device S6.

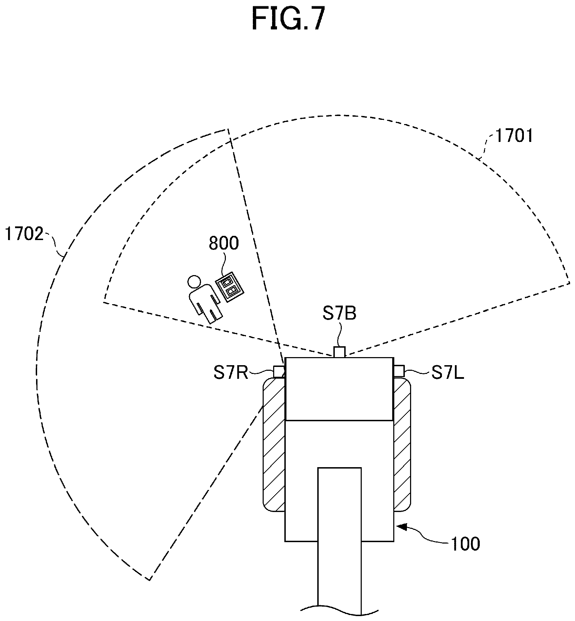

FIG. 7 is a diagram for explaining an example in which the worker is located at a calibratable position in order to perform the calibration between the distance measuring device S7B and the distance measuring device S7R according to the present embodiment. In the example illustrated in FIG. 7, the worker is located in a region where a distance measuring range 1701 of the distance measuring device S7B and a distance measuring range 1702 of the distance measuring device S7R overlap.

The worker can recognize that the current position is a calibratable position, by referring to the portable communication terminal 800 or by referring to the light sources L3 and L4. Accordingly, the calibration is performed by the controller 30.

Returning to the description of FIG. 4, in the case where the position determination unit 304 determines that the calibration target is located at the calibratable position, the feature extraction unit 306 extracts feature portions and features of the calibration target extracted by the target extraction unit 303, from the region where the calibration target is located, for each of the plurality of spatial recognition devices to be calibrated.

The calibration unit 307 performs the calibration among the plurality of spatial recognition devices, based on the feature portions and the features of the calibration target extracted by the feature extraction unit 306. A known calibration method can be used for the calibration, and thus, a description a particular calibration method will be omitted.

In the present embodiment, it is necessary to perform the calibration so that a correspondence relationship of the spatial recognition devices can be recognized. For example, in the case where the distance measuring devices S7B, S7L, and S7R and the imaging device S6 are used as the spatial recognition devices, the calibration unit 307 performs a calibration between the distance measuring device S7B and the distance measuring device S7B, in addition to the calibration between the distance measuring device S7B and the imaging device S6, and the calibration between the distance measuring device S7B and the distance measuring device S7R. Thus, the controller 30 can recognize the correspondence relationship of all of the spatial recognition devices provided in the crawler crane 100.

The present embodiment illustrates an example of an arrangement of the spatial recognition devices of the crawler crane 100, and the present invention is not limited to this arrangement. Even if the spatial recognition devices were arranged in another manner, the controller 30 may perform the calibration so that the correspondence relationship can be recognized for all of the spatial recognition devices provided in the crawler crane 100.

The controller 30 according to the present embodiment is described as controlling the light sources L1 through L4 and transmitting the screen information to the portable communication terminal 800 in the example described above. However, the present embodiment is not limited to this arrangement, and the controller 30 may perform only one of the control of the light sources L1 through L4 and the transmission of the screen information to the portable communication terminal 800.

In the present embodiment and the following embodiments and modifications, an example which teaches the worker whether or not the worker is located at the calibratable position is described. However, the present embodiment and the following embodiments and the modifications described below are not limited to the method of directly teaching the worker whether or not the worker is located at the calibratable position, using the light sources L1 through L4 and/or the portable communication terminal 800. For example, the worker may be taught whether or not the worker is located at the calibratable position, using the output device D1 inside the cabin 10 of the crawler crane 100. Further, the operator inside the cabin 10 may instruct the worker to move to a calibratable position.

### (Another Embodiment)

In one embodiment described above, the example in which the worker serving as the calibration target is caused to refer to the determination result of the position determination unit 304 is described. However, the present invention is not limited to the method of teaching the worker whether or not the worker is located at a calibratable position based on the determination result of the position determination unit 304 as in the embodiment described above. Hence, in another embodiment, a method of teaching the worker whether or not the worker is located at a calibratable position by causing the worker to refer to the detection result of the spatial recognition device will be described.

The controller 30 according to the present embodiment may not include the position determination unit 304 as in the embodiment described above. Instead, in the present embodiment, the output control unit 305 outputs the range image indicating the detection result of the first object detection unit 301 and/or the captured image indicating the detection result of the second object detection unit 302 to the portable communication terminal 800.

The portable communication terminal 800 displays an image (a range image or a captured image) indicating a detection result of a surrounding situation, for each of the spatial recognition devices to be calibrated, as a teaching on whether or not the worker is located at a calibratable position. Thus, the worker can recognize whether or not the worker is located at the calibratable position, for each of the spatial recognition devices. Next, a screen displayed on the portable communication terminal 800 will be described.

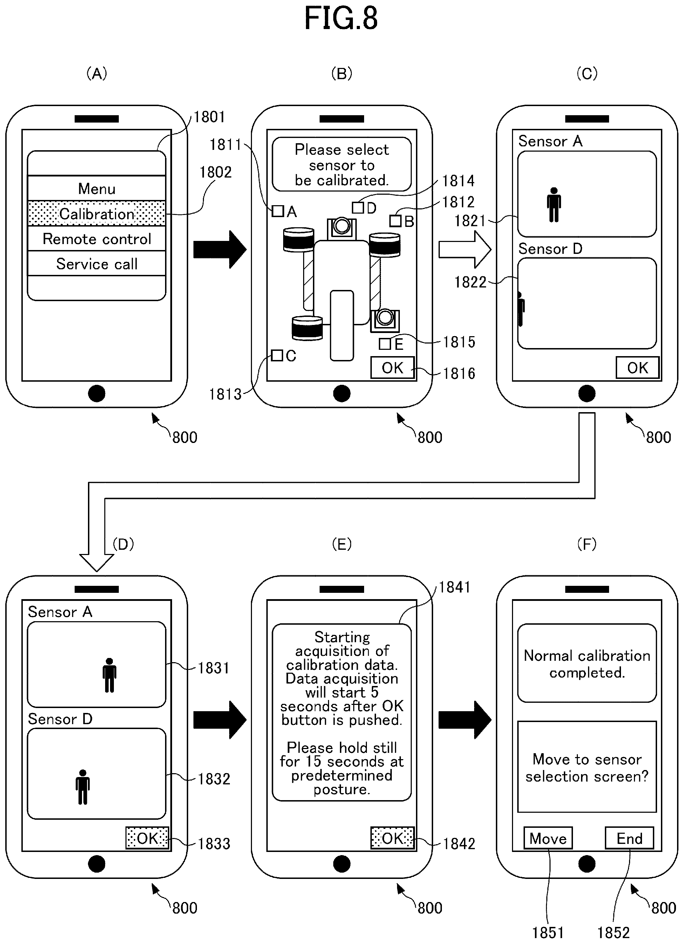

FIG. 8 is a diagram illustrating a transition of the screen displayed on the portable communication terminal 800 according to the present embodiment. In FIG. 8, (A) illustrates a menu screen 1801 displayed on the portable communication terminal 800. The selector 832 of the controller 830 receives selection of "calibration" 1802 via the input device 802.

In FIG. 8, (B) illustrates a sensor (a spatial recognition device) selection menu displayed on the display device 801 by the display controller 831. As illustrated in (B) of FIG. 8, checkboxes 1811 through 1815 for selecting the sensors (spatial recognition devices) are displayed together with the sensors (spatial recognition devices) to be calibrated. As illustrated in (B) of FIG. 8, a sensor A, a sensor B, and a sensor C corresponding to the distance measuring devices S7 and a sensor D and a sensor E corresponding to the imaging devices S6, respectively, are displayed in the selection menu in a manner selectable by checkboxes 1811 through 1815. An arrangement of the distance measuring devices S7 and the imaging devices S6 illustrated in (B) of FIG. 8 may be regarded as a variant of the arrangement according to one embodiment.

When the selector 832 receives the selection of two sensors among the sensors A through E indicated by two checkboxes among the checkboxes 1811 through 1815, and thereafter receives a pressing indication of an OK button 1816, the selector 832 recognizes that the selection of the spatial recognition devices to be calibrated is received.

Next, the selector 832 transmits information indicating the spatial recognition devices for which the selection is received, to the crawler crane 100 via the communication device T2. Thereafter, the communication device T2 receives image information indicating the detection results of the spatial recognition devices for which the selection is received, from the crawler crane 100. In the example illustrated in FIG. 8, it is assumed that the selection of the sensor A and the sensor D is received.

Next, the display controller 831 displays a display screen which displays image information indicating the detection results of the spatial recognition devices for which the selection is received. As illustrated in (C) of FIG. 8, the display screen displays an image (range image) 1821 indicating the detection result of the sensor A (distance measuring device S7) for which the selection is received, and an image (captured image) 1822 indicating the detection result of the sensor D (imaging device S6) for which the selection is received.

The worker can recognize that an entirety of the worker's body is not included in the imaging range of the sensor D (imaging device S6), by referring to the display screen illustrated in (C) of FIG. 8. Accordingly, the worker moves toward an imaging range of the sensor D (imaging device S6).

Even after the worker moves, the display controller 831 continuously displays the display screen displaying the image information indicating the detection result of the spatial recognition device for which the selection is received. As illustrated in (D) of FIG. 8, the display screen displays an image (range image) 1831 indicating the detection result of the sensor A (distance measuring device S7) for which the selection is received, and an image (captured image) 1832 indicating the detection result of the sensor D (imaging device S6) for which the selection is received.

The worker can recognize that the entirety of the worker's body is included in the distance measuring range of the sensor A (distance measuring device S7) and the imaging range of the sensor D (imaging device S6), by referring to the display screen illustrated in (D) of FIG. 8. Then, the worker presses an OK button 1833.

Next, after receiving a pressing indication of the OK button 1833, the display controller 831 displays a display screen displaying a message 1841 with respect to the worker. The worker can recognize that the worker is stationary in a predetermined posture for 15 seconds, by referring to the message 1841 included in the display screen illustrated in (E) of FIG. 8. The predetermined posture may be a posture determined in advance for performing the calibration. After the worker takes the predetermined posture, the worker presses an OK button 1842.

When the selector 832 receives a pressing indication of the OK button 1842, the selector 832 transmits a calibration start instruction to the crawler crane 100 via the communication device T2.

After the calibration is completed, the communication device T2 receives a calibration complete notification from the crawler crane 100.

Thereafter, the display controller 831 displays a display screen illustrated in (F) of FIG. 8. The worker can recognize that the calibration is completed by referring to the display screen illustrated in (F) of FIG. 8.

Next, the worker may carry out an operation to perform the calibration among other spatial recognition devices, or may end the calibration. In a case where the selector 832 receives a pressing indication of a move button 1851, the display controller 831 displays the selection screen illustrated in (B) of FIG. 8. In a case where the selector 832 receives a pressing indication of an end button 1852, the process is end.

The controller 30 of the crawler crane 100 and the controller 830 of the portable communication terminal 800 according to the present embodiment perform the control in order to display the display screen described above, and thus, the worker can recognize whether or not the worker is located at a calibratable position. Further, the worker can recognize the position where the worker is located with respect to the distance measuring range or the imaging range, by referring to the display screen. Because the worker can recognize the direction and the approximate distance to move in order to reach the calibratable position, the worker can thus quickly move to the calibratable position. Hence, the controller 30 of the crawler crane 100 and the controller 830 of the portable communication terminal 800 according to the present embodiment can prevent a failure of the calibration, and can thus improve the efficiency of the time required for the calibration.

### (Modification of Another Embodiment)

In another embodiment, the display screen indicating the detection results of the spatial recognition devices is output, to teach whether or not the object is located at the calibratable position. In a modification of another embodiment, a case where a moving direction is taught in addition to outputting the display screen will be described.

The position determination unit 304 of the controller 30 according to the present modification determines whether or not the person serving as the calibration target is located at a calibratable position, based on the measurement result of the distance measuring device S7. Further, in a case where the position determination unit 304 determines that the person is not located at the calibratable position, the position determination unit 304 identifies a moving direction in which the person is to move in order to reach the calibratable position.

Similarly, the position determination unit 304 determines whether or not the person serving as the calibration target is located at the calibratable position, based on the imaging result of the imaging device S6. Further, in the case where the position determination unit 304 determines that the person is not located at the calibratable position, the position determination unit 304 identifies the moving direction in which the person is to move in order to reach the calibratable position.

Next, the output control unit 305 outputs information indicating the moving direction identified by the position determination unit 304 to the portable communication terminal 800, together with the range image and/or the captured image, that is, together with at least one of the range image and the captured image.

Next, the display controller 831 of the portable communication terminal 800 displays a display screen based on the range image and/or the captured image and the information indicating the moving direction.

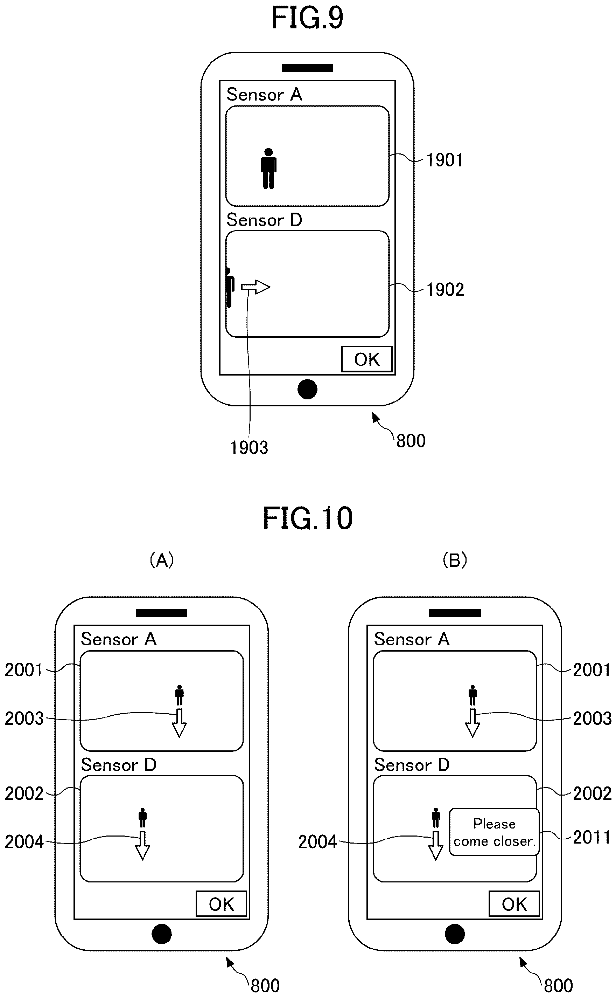

FIG. 9 is a diagram illustrating an example of a screen displayed on the display device 801 by the display controller 831 according to the present modification. In the example illustrated in FIG. 9, it is assumed that the sensor A and the sensor D are selected as the devices to be calibrated. In addition, FIG. 9 illustrates an example in which the entirety of the body of the worker serving as the calibration target is not included in the imaging range of the sensor D (imaging device S6) and a left portion of the worker's body is cut off.

In this case, the display controller 831 displays a range image 1901 indicating the detection result of the sensor A and a captured image 1902 indicating the detection result of the sensor D, and superimposes and displays an arrow mark 1903 indicating the received moving direction on the captured image 1902 indicating the detection result of the sensor D.

That is, by displaying the display screen illustrated in FIG. 9, the portable communication terminal 800 can guide the worker to the calibratable position.

In addition, the guidance provided with respect to the worker according to the present modification is not limited to the case where a body portion of the worker is cut off. For example, the guidance may be provided in a case where the worker is located at a position far from the crawler crane 100 such that the calibration is difficult to perform.

That is, the determination by the position determination unit 304 of the controller 30 to determine whether or not the worker is located at the calibratable position, includes a determination based on the distance from the crawler crane 100 to the worker. In addition, the information indicating the moving direction, output from the output control unit 305, also includes the direction approaching the crawler crane 100.

FIG. 10 is a diagram illustrating an example of a screen displayed on the display device 801 by the display controller 831 according to the present modification. In the example illustrated in FIG. 10, it is assumed that the sensor A and the sensor D are selected as the devices to be calibrated. Further, it is assumed that the worker serving as the calibration target is too far away from the crawler crane 100. For example, it is assumed that the worker is 7 m or more away from the spatial recognition device, even though a calibratable range is within 5 m from the spatial recognition device.

In this case, as illustrated by a display screen in (A) of FIG. 10, the display controller 831 displays a range image 2001 indicating the detection result of the sensor A and a captured image 2002 indicating the detection result of the sensor D, and superimposes and displays arrow marks 2003 and 2004 indicating moving directions on the range image 2001 and the captured image 2002, respectively.

The worker can recognize that the worker needs to approach the crawler crane 100, by referring to the display screen illustrated in (A) of FIG. 10. The present modification is not limited to displaying the arrows, and messages may also be displayed.

In a display screen illustrated in (B) of FIG. 10, a message 2011 is displayed in addition to the display of the range image, the captured image, and the arrows indicating the moving directions superimposed on the range image and the captured image, respectively. In the message 2011 illustrated in (B) of FIG. 10, a character string "Please come closer." urging the worker to come closer to the crawler crane 100 is described. However, the message to be displayed is not limited to the character string urging the worker to come closer, and at least one of the moving distance and the moving direction may be displayed instead.

In the present modification, an example in which the display device 801 displays the teaching of the moving direction to the worker is described. However, in the present modification, the teaching of the moving direction to the worker is not limited to the display on the display screen, and for example, the teaching may be notified by voice.

Moreover, in the present modification, an example in which the OK button is always displayed on the display screen in a pressable (or selectable) manner is described, but the present invention is not limited to such a display of the OK button. For example, the display controller 831 may hide or gray out (or disable) the OK button until the worker moves to calibratable position.

In the present modification, because the moving direction is indicated, the worker can recognize what to do so that calibration becomes possible. Accordingly, in the present modification, it is possible to shorten the time until the calibration is appropriately started, and improve the efficiency of the time required for the calibration.

### (Still Another Embodiment)

In the embodiments described above, the case where the calibration among the plurality of spatial recognition devices is performed once is described. However, it is preferable to perform the calibration among the plurality of spatial recognition devices a plurality of times. In still another embodiment, a case where the worker moves to a plurality of positions and a calibration is performed at each of the positions will be described.

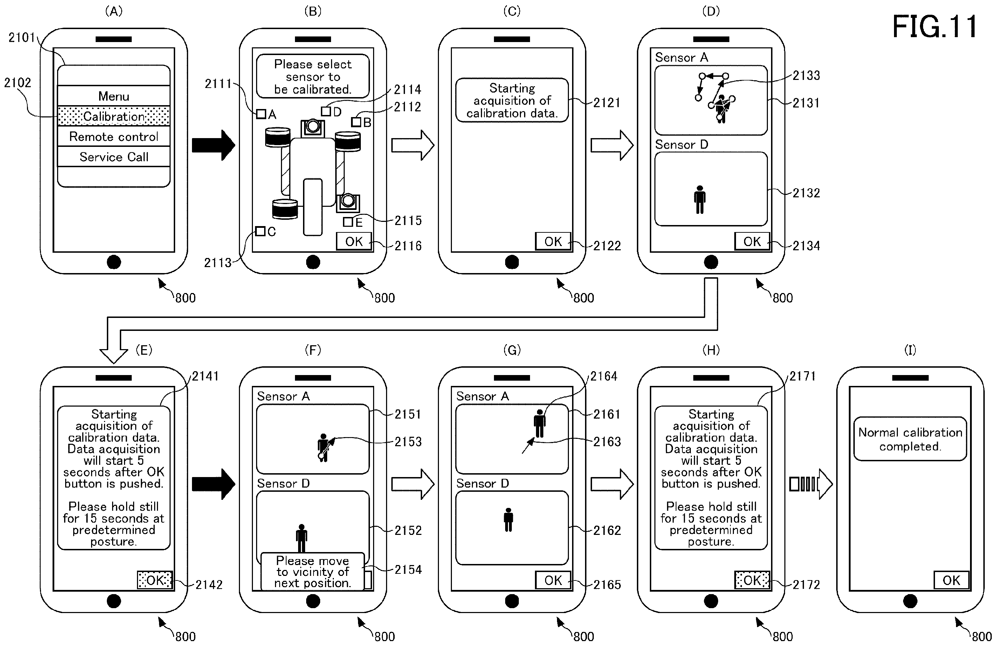

FIG. 11 is a diagram illustrating a transition of the screen displayed on the portable communication terminal 800 according to the present embodiment. In FIG. 11, (A) illustrates a menu screen 2101 displayed on the portable communication terminal 800. The selector 832 of the controller 830 receives a selection of "Calibration" 2102 via the input device 802.

In FIG. 11, (B) illustrates a sensor (spatial recognition device) selection screen displayed on the display device 801 by the display controller 831. In (B) of FIG. 11, checkboxes 2111 through 2115 for selecting the sensors are displayed together with the sensors (spatial recognition devices) to be calibrated.

In a case where the selector 832 receives a selection of two sensors among the sensors A through E indicated by the checkboxes 2111 through 2115, and thereafter receives a pressing indication of an OK button 2116, the selector 832 recognizes that the selection of the spatial recognition devices to be calibrated is received.

In addition, the selector 832 transmits information indicating the spatial recognition devices for which the selection is received to the crawler crane 100 via the communication device T2.

Next, the output control unit 305 of the crawler crane 100 generates a moving path of the worker for calibrating the plurality of spatial recognition devices for which the selection is received.

The moving path is generated so as to be included in the measuring range or the imaging range of each of the plurality of spatial recognition devices. The moving path is a path in which a plurality of positions to which the worker moves (is located) for the calibration are set. As an example, the moving path that is generated is a random path so as to be included in the measuring range or the imaging range of each of the plurality of spatial recognition devices, but the moving path may be determined in advance.

Further, the output control unit 305 transmits the generated moving path to the portable communication terminal 800 together with an image (a range image or a captured image) indicating the detection result of each of the plurality of spatial recognition devices for which the selection is received.

On the other hand, the display controller 831 displays a display screen including a message "Starting acquisition of calibration data." 2121 indicating that the calibration is started. As illustrated in (C) of FIG. 11, the display screen displays a message indicating that the calibration is started, together with an OK button 2122. In a case where the selector 832 receives a pressing indication of the OK button 2122, the display controller 831 displays a screen illustrated in (D) of FIG. 11 based on the received information.

The display screen illustrated in (D) of FIG. 11 displays an image (range image) 2131 indicating the detection result of the sensor A (distance measuring device S7) for which the selection is received, and an image (captured image) 2132 indicating the detection result of the sensor D (imaging device S6) for which the selection is received. Further, a moving path 2133 of the worker is superimposed on the image 2131.

The moving path 2133 is configured by positions where the worker is to stop and perform the calibration, and an arrow indicating a movement between the positions. The worker repeats stopping at the position indicated by the moving path 2133 and moving, thereby enabling the calibration to be performed a plurality of times.

The worker can recognize the moving path for the calibration, by referring to the display screen illustrated in (D) of FIG. 11. In a case where the selector 832 receives a pressing indication of an OK button 2134, the display controller 831 displays the screen illustrated in (E) of FIG. 11.

A display screen illustrated in (E) of FIG. 11 displays a procedure for performing the calibration as a message 2141. The worker can recognize the procedure for performing the calibration at a current position, by referring to the display screen illustrated in (E) of FIG. 11. That is, the worker can recognize that the worker is to take a predetermined posture within 5 seconds after pressing the OK button 2142, and hold still for 15 seconds.

In a case where the selector 832 receives a pressing indication of the OK button 2142, the selector 832 transmits an instruction to start the calibration to the crawler crane 100. Accordingly, the controller 30 of the crawler crane 100 starts the calibration with the worker located at the current position serving as the calibration target.

After the calibration is completed, the display controller 831 displays a screen illustrated in (F) of FIG. 11. The display screen illustrated in (F) of FIG. 11 displays an image (range image) 2151 indicating the detection result of the sensor A (distance measuring device S7) for which the selection is received, and an image (captured image) 2152 indicating the detection result of the sensor D (imaging device S6) for which the selection is been received. In addition, an arrow mark 2153 for guiding the worker to move to the next position is superimposed on the image 2151. Further, the display controller 831 displays a message "Please move to vicinity of next position." 2154 for urging the worker to move.

A display screen illustrated in (G) of FIG. 11 is displayed by the display controller 831 after the worker moves to the next position. The display screen illustrated in (G) of FIG. 11 displays an image (range image) 2161, an image (captured image) 2162, and an arrow mark 2163. The worker can recognize that the worker moved to the next calibratable position, by referring to the arrow mark 2163 and a region 2164 in which the worker is displayed in the image (range image) 2161. In the display screen illustrated in (G) of FIG. 11, the message 2154 is not displayed because the worker moved to the next calibratable position. The display controller 831 may display a message, such as "Please stop." or the like, in a case where it is determined that the worker reached a vicinity of a tip end of the arrow mark 2163.

In a case where the selector 832 receives a pressing indication of an OK button 2165, the display controller 831 displays a screen illustrated in (H) of FIG. 11.

The display screen illustrated in (H) of FIG. 11 displays a procedure for performing the calibration as a message 2171. The worker can recognize the procedure of the calibration at the current position, by referring to the display screen illustrated in (H) of FIG. 11. That is, the worker can recognize that the worker is to take a predetermined posture within 5 seconds after pressing an OK button 2172 and hold still for 15 seconds.

In the present embodiment, the display of the screens illustrated in (F) through (H) of FIG. 11 is repeated for each position indicated by the moving path 2133.

Next, the controller 30 of the crawler crane 100 performs the calibration among the plurality of spatial recognition devices, based on the worker located at each of the plurality of positions indicated by the moving path 2133.

Next, when all of the calibration is completed for each of the plurality of positions indicated by the moving path 2133, the display controller 831 displays a display screen illustrated in (I) of FIG. 11. The worker can recognize that the calibration is completed, by referring to the display screen illustrated in (I) of FIG. 11.

In the present embodiment, the worker serving as the calibration target moves to a plurality of positions, and the controller 30 performs the calibration for each of the plurality of positions. Hence, it is possible to improve the accuracy of calibration.

### (Modification of Still Another Embodiment)

In still another embodiment described above, an example in which the output control unit 305 of the crawler crane 100 generates a random path has been described. However, the present invention is not limited to the generation of the random paths. In a modification of still another embodiment, a method of generating a moving path will be described.

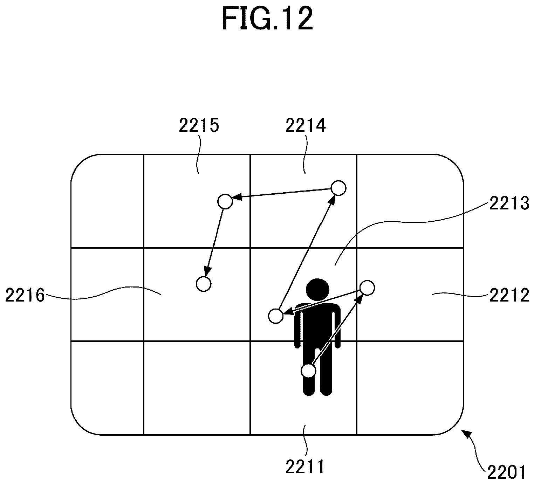

FIG. 12 is a schematic diagram illustrating a method of generating the moving path by the output control unit 305 according to the modification of still another embodiment. A region 2201 illustrated in FIG. 12 indicates a common region that is common to the ranges detectable by the selected plurality of spatial recognition devices. By generating a moving path in the common region, the calibration becomes possible. The positions included in the moving path are preferably scattered.

For this reason, the output control unit 305 divides (or segments) the common region 2201 illustrated in FIG. 12 into a predetermined number of subregions. In the example illustrated in FIG. 12, the common region 2201 is divided into three subregions in a vertical direction, and is divided into four subregions in a horizontal direction. Further, the output control unit 305 generates (or sets) the moving path so as to include the positions where the worker is to stop (is to be located) and to extend over three or more subregions among the divided subregions. In the example illustrated in FIG. 12, the moving path is generated so as to perform the calibration in each of divided subregions 2211, 2212, 2213, 2214, 2215, and 2216.

The control is otherwise the same as that of still another embodiment, and a description thereof will be omitted. The present modification of still another embodiment is merely an example, and the number of subregions into which the common region 2201 is to be divided is not limited to the example illustrated in FIG. 12. The number of divisions in the vertical direction may be two or less and four or more, and the number of divisions in the horizontal direction may be three or less and five or more. In addition, the moving path may be generated to extend over two subregions or less.

The method of generating the moving path is not limited to that of the embodiments and the modifications described above, and another generation method may be used. For example, the moving path may be generated so as to avoid an obstacle located within the common region 2201.

In the moving path generated by the output control unit 305 according to the present modification of still another embodiment, the positions at which the worker stops to perform the calibration are scattered. Therefore, the controller 30 can perform the calibration at various positions included in the moving path, and thus, it is possible to improve the accuracy of the calibration among the plurality of spatial recognition devices.

In the embodiments and modifications described above, the crawler crane 100 is used as the work machine. However, the work machine in the embodiments and the modifications is not limited to the crawler crane 100, and the work machine may be a forklift or an overhead crane that can move according to the operator's operation, or may be a fixed power crane. Further, the work machine may be a road machine including an asphalt finisher or the like, or may be a construction machine including a shovel or the like.

### <Advantageous Features>

The calibration system configured by the crawler crane 100 and the portable communication terminal 800 according to the embodiments and modifications described above enables the worker serving as the calibration target to whether or not the worker is located at a calibratable position, based on the information displayed on the light sources L1 through L4 or the portable communication terminal 800. Because the controller 30 of the crawler crane 100 can perform the calibration among the plurality of spatial recognition devices after confirming that the worker is located at a calibratable position, it is possible to prevent a calibration failure or the like. Accordingly, the controller 30 can shorten the time required to complete the calibration, and improve the efficiency of time required for the calibration.

According to one aspect of the present invention, it is possible to improve an efficiency of time required for a calibration among a plurality of spatial recognition devices.

Although the embodiments and modifications of the calibration system for the spatial recognition devices for the work machine and the work machine according to the present invention are described above, the present invention is not limited to the above described embodiments or the like. The embodiments and modifications described above may be embodied in a variety of other forms. Furthermore, various omissions, substitutions and modifications in the form of the embodiments described herein may be made without departing from the spirit of the present invention. The accompanying claims and their equivalents are intended to cover such forms or modifications as would fall within the scope and spirit of the present invention.

## Claims

1. A calibration system for spatial recognition devices for a work machine, comprising:
a work machine;
a plurality of spatial recognition devices provided in the work machine and configured to acquire a surrounding situation of the work machine; and
a control device configured to calibrate the plurality of spatial recognition devices, based on an object located around the work machine,
wherein the control device is configured to teach each spatial recognition device of the plurality of spatial recognition devices whether or not the object is located at a calibratable position.

2. The calibration system as claimed in claim 1, wherein the control device is configured to determine whether or not the object is located at the calibratable position and output a determination result for each spatial recognition device of the plurality of spatial recognition devices.

3. The calibration system as claimed in claim 2, wherein the control device is configured to output information indicating a moving direction of the object when the control device determines that the object is not located at the calibratable position.

4. The calibration system as claimed in any one of claims 1 to 3, wherein:
the work machine is provided with a light source at a position corresponding to each spatial recognition device of the plurality of spatial recognition devices, and
the control device is configured to control the light source provided at the position corresponding to each spatial recognition device of the plurality of spatial recognition devices to emit light based on whether or not the object is located at the calibratable position.

5. The calibration system as claimed in any one of claims 1 to 4, further comprising:
a communication device communicable with an external device,
wherein the control device is configured to teach the external device via the communication device whether or not the object is located at the calibratable position.

6. The calibration system as claimed in claim 5, further comprising:
the external device,
wherein the external device is configured to display image information indicating a detection result of the surrounding situation for each spatial recognition device of the plurality of spatial recognition devices, as a teaching of whether or not the object is located at the calibratable position.

7. The calibration system as claimed in claim 5 or 6, wherein:
the plurality of spatial recognition devices include three or more spatial recognition devices, and
the control device receives information indicating a calibration target from the external device, and selects one spatial recognition device of the plurality of spatial recognition devices to be calibrated based on the information.

8. The calibration system as claimed in claim 5 or 6, wherein the control device is configured to:
set a plurality of positions to which the object moves for calibration, and output the plurality of set positions with respect to the external device via the communication device, and
calibrate the plurality of spatial recognition devices based on the object located at each position of the plurality of set positions.

9. The calibration system as claimed in claim 8, wherein the control device is configured to divide a region common to the detectable ranges of the plurality of spatial recognition devices into a predetermined number of regions, and set a position where the object is to be positioned for calibration in each of the divided regions.

10. A work machine comprising:
a plurality of spatial recognition devices configured to acquire a surrounding situation of the work machine; and
a control device configured to calibrate the plurality of spatial recognition devices, based on an object located around the work machine,
wherein the control device is configured to teach each spatial recognition device of the plurality of spatial recognition devices whether or not the object is located at a calibratable position.
